Europäisches Patentamt

European Patent Office

Office européen des brevets

(11) Veröffentlichungsnummer: **0 343 146**
**A2**

(12) # EUROPÄISCHE PATENTANMELDUNG

(21) Anmeldenummer: 89890136.8

(22) Anmeldetag: 08.05.89

(51) Int. Cl.⁴: **F 16 H 57/04**
**F 16 H 1/40**

(30) Priorität: 17.05.88 AT 1278/88

(43) Veröffentlichungstag der Anmeldung:
23.11.89 Patentblatt 89/47

(84) Benannte Vertragsstaaten:
AT DE ES FR GB IT NL SE

(71) Anmelder: **STEYR-DAIMLER-PUCH**
**AKTIENGESELLSCHAFT**
**Franz-Josefs-Kai 51**
**A-1010 Wien (AT)**

(72) Erfinder: **Leitner, Max**
**Madlsederstrasse 11**
**A-4400 Steyr (AT)**

(54) **Ausgleichsgetriebe.**

(57) Ein Ausgleichsgetriebe (1) weist ein in einem Getriebegehäuse (2) dreh- und antreibbar gelagertes Ausgleichsgehäuse
(3) zur Aufnahme ineinandergreifender Ausgleichs- und Abtriebsräder (5,6) auf, wobei das Getriebegehäuse (2) einen
Ölraum (9) bildet und das beiderseits der durch die Ausgleichsräderachsen bestimmten Mittelebene mit Öldurchtrittslöchern
(10,11) versehene Ausgleichsgehäuse (3) in den Ölsumpf des
Ölraumes (9) eintaucht.

Um mit geringem Bau- und Konstruktionsaufwand eine
ausreichende Ausgleichsschmierung zu gewährleisten, sind die
Öldurchtrittslöcher (10) einer Ausgleichsgehäuseseite außen
mit einem rotationssymmetrischen, zur Drehachse des Ausgleichsgehäuses (3) koaxialen Schleudertopf (12) überdeckt,
welcher sich zur Ausgleichsgehäusemittelebene hin zumindest
abschnittsweise erweiternde Schleudertopf (12) radial außerhalb der Öldurchtrittslöcher (10) dicht am Ausgleichsgehäuse
(3) anschließt und radial innerhalb der Öldurchtrittslöcher (10)
eine Öleinlaßöffnung (13) besitzt.

EP 0 343 146 A2

**Beschreibung**

Die Erfindung bezieht sich auf ein Ausgleichsgetriebe, mit einem in einem Getriebegehäuse dreh- und antreibbar gelagerten Ausgleichsgehäuse zur Aufnahme ineinandergreifender Ausgleichs-und Abtriebsräder, wobei das Getriebegehäuse einen Ölraum bildet und das beiderseits der durch die Ausgleichsräderachsen bestimmten Mittelebene Öldurchtrittslöcher aufweisende Ausgleichsgehäuse in den Ölsumpf des Ölraumes eintaucht.

Zur Schmierung des Ausgleichs, also der Ausgleichs- und Abtriebsräder u.dgl. ist es notwendig, Schmieröl in das Innere des Ausgleichsgehäuses zu bringen, wozu im Ausgleichsgehäuse Öldurchtrittslöcher vorgesehen sind, die beim Eintauchen des Ausgleichsgehäuses in einen Ölsumpf des Getriebegehäuses das Eindringen des Öls aus dem Ölsumpf in das Ausgleichsgehäuseinnere erlauben. Allerdings wird fliehkraftbedingt das Öl bei einer Drehung des Ausgleichsgehäuses auswärts gedrückt, so daß im Falle eines Ausgleichs bei einer Relativbewegung der Ausgleichs- und Abtriebsräder gegenüber dem Ausgleichsgehäuse die Gefahr einer unzureichenden Schmierung und eines Trockenlaufens besteht.

Der Erfindung liegt daher die Augabe zugrunde, diese Mängel zu beseitigen und ein Ausgleichsgetriebe der eingangs geschilderten Art mit verhältnismäßig geringem Bau- und Konstruktionsaufwand so zu verbessern, daß jederzeit eine ausreichende Ausgleichsschmierung gewährleistet ist.

Die Erfindung löst diese Aufgabe dadurch, daß die Öldurchtrittslöcher einer Ausgleichsgehäuseseite außen mit einem rotationssymmetrischen, zur Drehachse des Ausgleichsgehäuses koaxialen Schleudertopf überdeckt sind, welcher sich zur Ausgleichsgehäusemittelebene hin zumindest abschnittsweise erweiternde Schleudertopf radial außerhalb der Öldurchtrittslöcher dicht am Ausgleichsgehäuse anschließt und radial innerhalb der Öldurchtrittslöcher eine Öleinlaßöffnung besitzt. Dieser sich mit dem Ausgleichsgehäuse mitdrehende Schleudertopf drängt das durch die Öleinlaßöffnung einströmende Öl auf Grund der Fliehkraftwirkung entlang der sich erweiternden Abschnitte ins Topfinnere, so daß nach einer Befüllung des Topfes das Öl zwangsweise durch die Öldurchtrittslöcher in das Ausgleichsgehäuse einfließt. Durch den Schleudertopf wird ein Pumpeffekt erzielt, der das Schmieröl während einer Ausgleichsgehäusedrehung in das Ausgleichsgehäuse strömen läßt. Es kommt nicht nur zu einer ausreichenden Ölmenge innerhalb des Ausgleichsgehäuses, die bei einer Ausgleichsbewegung die allen Anforderungen genügende Tauchschmierung für die Ausgleichs- und Abtriebsräder gewährleistet, sondern wegen der auf der anderen Gehäuseseite liegenden freien Öldurchtrittslöcher auch zu einem ständigen Öldurchfluß durch das Ausgleichsgehäuse, der eine kontinuierliche Frischölversorgung der Ausgleichsschmierung sicherstellt.

Weist erfindungsgemäß der Schleudertopf im wesentlichen die Form eines Kegelstumpfmantels auf, der mit seiner kleineren, das Ausgleichsgehäuse frei umgebenden Öffnung die Öleinlaßöffnung bildet und mit einem die größere Öffnung begrenzenden Ringflansch am Ausgleichsgehäuse vorzugsweise durch ein Aufschrumpfen od.dgl. befestigt ist, entsteht ein einfach und aufwandsarm herstellbarer Schleudertopf mit ausgezeichneter Pumpwirkung und geschickter Montagemöglichkeit.

Nach einer besonders vorteilhaften Ausgestaltung der Erfindung ist zwischen Schleudertopf bzw. Ausgleichsgehäuse einerseits und Getriebegehäuse anderseits eine Umfangsdichtung, vorzugsweise eine Labyrinthdichtung, vorgesehen. Durch diese Dichtung wird der Ölraum schleudertopfseitig begrenzt, was die Ölversorgung der Ausgleichsschmierung verbessert und auch die erzielbare Pumpwirkung des Schleudertopfes steigert, so daß sogar eine rationelle Selbstbefüllung des Ausgleichsgehäuses bei Ölwechsel u.dgl. möglich ist.

Sind weiters die den überdeckten Öldurchtrittslöchern gegenüberliegenden Durchtrittslöcher des Ausgleichsgehäuses achsparallel ausgerichtet und auf einem im Radius an die radiale Erstreckung der Öleinlaßöffnung angepaßten Umfangskreis angeordnet, wird durch diese Durchtrittslöcher ein exakter Ölüberlauf erreicht, der durch die Wahl des jeweiligen Umfangskreises die Anpassung des jeweiligen Ölstandes an die gegebenen Schmierbedingungen erlaubt.

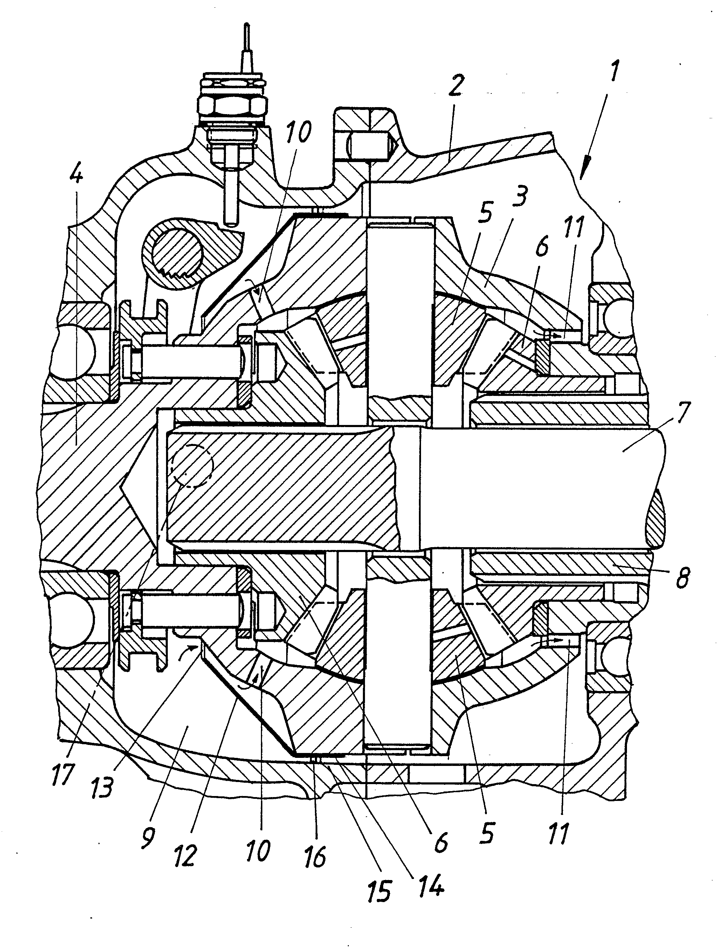

In der Zeichnung ist ein erfindungsgemäßes Ausgleichsgetriebe beispielsweise im Axialschnitt näher veranschaulicht.

Ein Ausgleichsgetriebe 1, beispielsweise das dargestellte Ausgleichsgetriebe für einen Längsausgleich eines Kraftfahrzeugantriebes, weist ein Getriebegehäuse 2 auf, in dem ein Ausgleichsgehäuse 3 dreh- und über einen Wellenansatz 4 antriebbar gelagert ist. Das Ausgleichsgehäuse 3 nimmt als Kegelradgetriebe zusammenwirkende Ausgleichsräder 5 und Abtriebsräder 6 auf, wobei eine 7 der den Abtriebsrädern 6 zugehörenden Abtriebswellen 7,8 durch die hohle andere 8 aus dem Ausgleichsgehäuse 3 herausgeführt ist.

Zur Schmierung des Ausgleichs bildet das Getriebegehäuse 2 mit einem Ölraum 9 einen Ölsumpf und das in den Ölsumpf eintauchende Ausgleichsgehäuse 3 weist Öldurchtrittslöcher 10, 11 auf. Die dem Ölraum 9 zugekehrten Öldurchtrittslöcher 10 sind dabei durch einen zur Drehachse des Ausgleichsgehäuses 3 koaxialen, im wesentlichen in Form eines Kegelstumpfmantels hergestellten Schleudertopf 12 überdeckt, der mit seiner kleineren Öffnung radial innerhalb der Öldurchtrittslöcher 10 eine Öleinlaßöffnung 13 bildet und mit einem Ringflansch 14 entlang seiner größeren Öffnung dicht am Ausgleichsgehäuse 3 aufgeschrumpft ist. Zwischen dem Ringflansch 14 und einem entsprechenden zylindrischen Innenwandabschnitt 15 des Getriebegehäuses 2 ist außerdem eine Labyrinthdichtung 16 zum Abschluß des Ölraumes 9 eingesetzt.

Im Betrieb des Ausgleichsgetriebes 1 dreht sich das Ausgleichsgehäuse 3 und sobald der Ölspiegel des durch einen nur angedeuteten Ölzulauf 17 im Ölraum 9 aufgefüllten Ölsumpfes die Öleinlaßöffnung 13 des Schleudertopfes 12 erreicht hat, strömt das Öl in den Schleudertopf 12 und wird durch diesen fliehkraftbedingt ins Topfinnere und über das Topfinnere durch die Durchtrittslöcher 10 in das Ausgleichsgehäuse 3 gedrückt. Es kommt zu einer steten Pumpwirkung, die das Ausgleichsgehäuse 3 mit Öl versorgt und eine ausreichende Schmierung der Ausgleichs- und Abtriebsräder 5, 6 gewährleistet. Die dem Ölraum 9 abgekehrten Durchtrittslöcher 11 des Ausgleichsgehäuses 3 sind achsparallel ausgerichtet, liegen auf einem Umfangskreis mit etwa der Einlaßöffnung 13 entsprechendem Durchmesser und dienen als die Ölfüllung des Ausgleichsgehäuses 3 bestimmender Ölüberlauf. Das aus den Durchtrittsöffnungen 11 auslaufende Öl gelangt wieder in den Gesamtschmierölkreislauf, wobei es unmittelbar anschließend zur Schmierung weiterer Getriebeteile verwendet werden kann.

Der aufwandsarm herstellbare, leicht zu montierende Schleudertopf 12 führt auf einfache Weise zu einer sicheren Ausgleichsschmierung und läßt sich zusätzlich als Ölpumpe zur Erleichterung der Ölbefüllung einsetzen.

**Patentansprüche**

1. Ausgleichsgetriebe (1), mit einem in einem Getriebegehäuse (2) dreh- und antreibbar gelagerten Ausgleichsgehäuse (3) zur Aufnahme ineinandergreifender Ausgleichs- und Abtriebsräder (5,6), wobei das Getriebegehäuse (2) einen Ölraum (9) bildet und das beiderseits der durch die Ausgleichsräderachsen bestimmten Mittelebene Öldurchtrittslöcher (10,11) aufweisende Ausgleichsgehäuse (3) in den Ölsumpf des Ölraumes eintaucht, **dadurch gekennzeichnet**, daß die Öldurchtrittslöcher (10) einer Ausgleichsgehäuseseite außen mit einem rotationssymmetrischen, zur Drehachse des Ausgleichsgehäuses (3) koaxialen Schleudertopf (12) überdeckt sind, welcher sich zur Ausgleichsgehäusemittelebene hin zumindest abschnittsweise erweiternde Schleudertopf (12) radial außerhalb der Öldurchtrittslöcher (10) dicht am Ausgleichsgehäuse (3) anschließt und radial innerhalb der Öldurchtrittslöcher (10) eine Öleinlaßöffnung (13) besitzt.

2. Ausgleichsgetriebe nach Anspruch 1, **dadurch gekennzeichnet**, daß der Schleudertopf (12) im wesentlichen die Form eines Kegelstumpfmantels aufweist, der mit seiner kleineren, das Ausgleichsgehäuse (3) frei umgebenden Öffnung die Öleinlaßöffnung (13) bildet und mit einem die größere Öffnung begrenzenden Ringflansch (14) am Ausgleichsgehäuse (3) vorzugsweise durch ein Aufschrumpfen od.dgl. befestigt ist.

3. Ausgleichsgetriebe nach Anspruch 1 oder 2, **dadurch gekennzeichnet**, daß zwischen Schleudertopf (12) bzw. Ausgleichsgehäuse (3) einerseits und Getriebegehäuse (2) andererseits eine Umfangsdichtung, vorzugsweise eine Labyrinthdichtung (16) vorgesehen ist.

4. Ausgleichsgetriebe nach einem der Ansprüche 1 bis 3, **dadurch gekennzeichnet**, daß die den überdeckten Öldurchtrittslöchern (10) gegenüberliegenden Durchtrittslöcher (11) des Ausgleichsgehäuses (3) achsparallel ausgerichtet und auf einem im Radius an die radiale Erstreckung der Öleinlaßöffnung (13) angepaßten Umfangskreis angeordnet sind.